(19)

Europäisches Patentamt

European Patent Office

Office européen des brevets

(11)  **EP 4 366 229 A1**

(12)  **EUROPEAN PATENT APPLICATION**

(43) Date of publication:
**08.05.2024  Bulletin 2024/19**

(21) Application number: **22383064.7**

(22) Date of filing: **04.11.2022**

(51) International Patent Classification (IPC):
**H04L 9/00** *(2022.01)*        **H04L 9/08** *(2006.01)*

(52) Cooperative Patent Classification (CPC):
**H04L 9/00; H04L 9/0852**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Multiverse Computing S.L.**
**20014 Donostia / San Sebastián (ES)**

(72) Inventors:
 • **Aizpurua, Borja**
  **20014 Donostia / San Sebastián (ES)**

 • **Bermejo, Pablo**
  **20014 Donostia / San Sebastián (ES)**
 • **Orús, Román**
  **20014 Donostia / San Sebastián (ES)**

(74) Representative: **Sonnenberg Harrison
Partnerschaft mbB
Herzogspitalstraße 10a
80331 München (DE)**

Remarks:
Amended claims in accordance with Rule 137(2)
EPC.

(54)  **VARIATIONAL QUANTUM ATTACK FOR CRYPTOGRAPHIC PROTOCOLS**

(57)  A method is disclosed for determining an encryption key in a key space for encrypting a plaintext to a corresponding encrypted ciphertext. The method comprises constructing (S220) a Hamiltonian based on the encrypted ciphertext, encoding (S230) the key space (320) into a quantum circuit (310), encrypting (S240) the plaintext using the quantum circuit (310) to obtain a superposition of ciphertexts and measuring the superposition of ciphertexts to determining (S280) an overlap between the measured superposition of ciphertexts and the encrypted cyphertext. On reaching a pre-determined overlap value, the key space (320) is collapsed (S290) to determine the encryption key, or otherwise parameters of the quantum circuit (310) are adjusted.

Fig 2

EP 4 366 229 A1

**Description**

Field of the Invention

The invention relates to a method for attacking cryptographic protocols to determine an encryption key.

Background of the Invention

Security of information plays an important role in defence, in the economy and in people's livelihood. Sensitive information is often encrypted using a so-called "key". Ciphertext is used for a result of encryption performed on plain text using a cryptography algorithm, called a cipher. The term "ciphertext" is also known as "encrypted" or "encoded" information because the ciphertext contains a form of the original (unencrypted) plaintext that is unreadable by a human or computer without the proper cipher to decrypt the ciphertext. The encryption process prevents the loss of the sensitive information via, for example, hacking. Decryption is the inverse of encryption and is the process of turning ciphertext back into readable plaintext.

Mathematically, encryption can be expressed as follows. Suppose $m$ is the plaintext message that Alice wants to secretly transmit to Bob and let $E_k$ be the encryption cipher, where k represents a cryptographic key. Alice must first transform the plaintext into ciphertext, $c_m$ order to securely send the message to Bob, as follows:

$$c_m = E_k(m)$$

In a symmetric-key system, Bob knows Alice's encryption key $k$. Once the message in plaintext is encrypted, Alice can safely transmit the message as ciphertext to Bob (assuming no one else knows the encryption key $k$). To read Alice's message, Bob must decrypt the ciphertext using $E_k^{-1}$, i.e., the inverse of $E_k$. This is known as the decryption cipher, $D_k$:

$$D_k(c_m) = D_k(E_k(m)) = m$$

Alternatively, in a non-symmetric key system, everyone, not just Alice and Bob, knows the encryption key. However, the decryption key $D_k$ in the non-symmetric key system cannot be inferred from the encryption key $E_k$. Only Bob knows the decryption key $D_k$, and decryption proceeds as

$$D_k(c) = m \,.$$

Currently, asymmetric cryptography is typically employed for transmitting the secret key from one place to another (i.e., from Alice to Bob) and symmetric cryptography, such as the Advanced Encryption Standard (AES), is used for encrypting data using the secret k. The development of quantum computers with their potential to break current cryptographic systems means that an increasing amount of attention is being paid to the security analysis of classical cryptography.

A lot of research has been made into methods for breaking such cryptographic protocols. For example, Shor's algorithm has been found capable of decrypting RSA cryptography in polynomial time, which threatens the security of asymmetric cryptography. For symmetric cryptography, Grover's algorithm can find the key in a set having N entries by only evaluating on the order of square root of N entries.

The application of quantum computing offers the potential to accelerate cryptographic-breaking methods. Currently we are in the noisy intermediate-scale quantum (NISQ) era at which real-life quantum computing systems are characterized by a number of restrictions, such as a low number of qubits, low fidelity, and shallow quantum circuits. Under these restrictions, various classical-quantum hybrid algorithms have been proposed, including the variational quantum algorithm (VQA) and the Quantum Approximate Optimization Algorithm (QAOA). VQA and QAOA quantum-classical hybrid algorithms have been found to have significant advantages in solving combinatorial optimization and Hamiltonian ground state problems. VQA has found applications both in quantum chemistry, as well as in quantum machine learning, and in quantum finance.

A variational quantum attack algorithm (VQA) to symmetric-key AES-like cryptography is described in Wang et al. "A Variational Quantum Attack for AES-like Symmetric Cryptography" at https://arxiv.org/abs/2205.03529. The authors of this article describe how the known ciphertext is encoded as the ground state of a Hamiltonian that is constructed through a regular graph. The ground state of the Hamiltonian is found using a variational approach. The authors designed an ansatz and cost function for the variational quantum attack.

Summary of the Invention

This document will describe an improved method to attack cryptographic protocols to determine an encryption key. The method is applicable to both symmetric and non-symmetric protocols.

The method described in this document adds several features to known methods to significantly reduce the number of qubits used in the attack on cryptographic protocols, generalize the method also to non-symmetric protocols, and enhance the overall performance of the algorithm by fragmenting the qubits' Bloch spheres into pieces for universal quantum computers. A variation of the method can also be implemented via quantum annealing, and another variation via quantum-inspired tensor networks.

As set out above, the method is used to attack the cryptographic protocol and determine an encryption key in a key space. The encryption key is a public key or a private key and is used for encrypting a plaintext to a corresponding encrypted ciphertext. The method set out in this document comprises constructing a Hamiltonian based on the encrypted ciphertext, encoding the key space into a quantum circuit, encrypting the plaintext using the quantum circuit to obtain a superposition of ciphertexts, measuring the superposition of ciphertexts and determining an overlap between the measured superposition of ciphertexts and the encrypted ciphertext. On reaching a pre-determined overlap value, the key space is collapsed to determine the encryption key, otherwise parameters of the quantum circuit are adjusted.

As will be explained in more detail later, the parameters of the quantum circuit can be adjusted until the best fit is available or a reasonable amount of time has passed in this optimization step. The step of adjusting the parameters of the circuit comprises using a classical optimization algorithm. For example, the classical optimization algorithm can be a gradient descent method, but this is not limiting of the invention.

The encoding of the key space into the circuit is one of encoding into a parameterized quantum circuit or a tensor network.

In one aspect, the method comprises of constructing of the Hamiltonian comprises creating a graph with a plurality of nodes representing the bits of the encrypted ciphertext. The graph is, for example, a 3-regular graph.

The encrypting may be carried out using one of a classical processor or a quantum processor.

In a further aspect, the collapse of the key space can be carried out before the encrypting in the classical processor. This saves on the number qubits required.

The method of can also be used to determine a private key from a message which has been previously encoded into a cyphertext. In this case, the encrypting comprises decrypting a previously encrypted cyphertext.

A system for determining the encryption key is also disclosed. The system comprises at least one input/out device for inputting a plaintext, at least one encryption element for encrypting the plaintext, at least one quantum circuit encoding the key space; and at least one optimization element for adjusting the parameters of the quantum circuit.

The quantum circuit can be implemented as one of a quantum annealer or a quantum gate computer. The encryption element is implemented in a quantum computer or a classical computer.

In one aspect, the system further comprises a further encryption element for encrypting an incoming message using a public key and the at least one encryption element can be replaced by a decryption element.

Description of the Figures

Fig. 1 shows an overview of a hybrid classical-quantum system.
Fig. 2 shows an outline of the method.
Fig. 3 shows elements used in the method.
Fig. 4 shows a 3-regular graph.
Fig. 5 shows a parameterized quantum circuit.
Fig. 6 shows the results of a simulation.
Figs. 7A-7C shows a further aspect of the approach.
Fig. 8 shows Bloch spheres.
Fig. 9 shows the use of a quantum annealer.

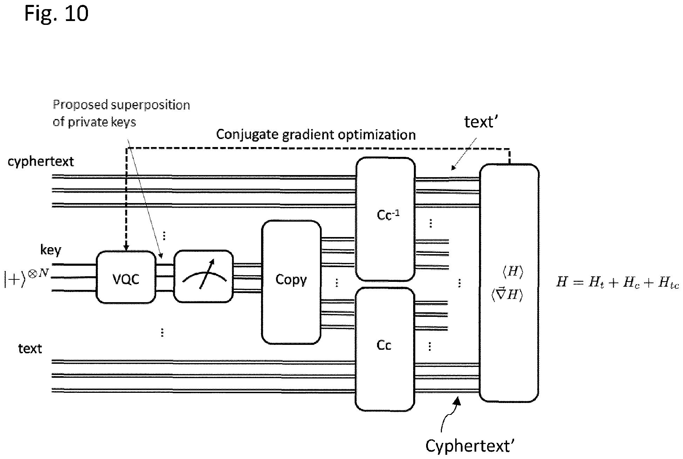

Fig. 10 shows the use for an asymmetric key.

Detailed Description of the Invention

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

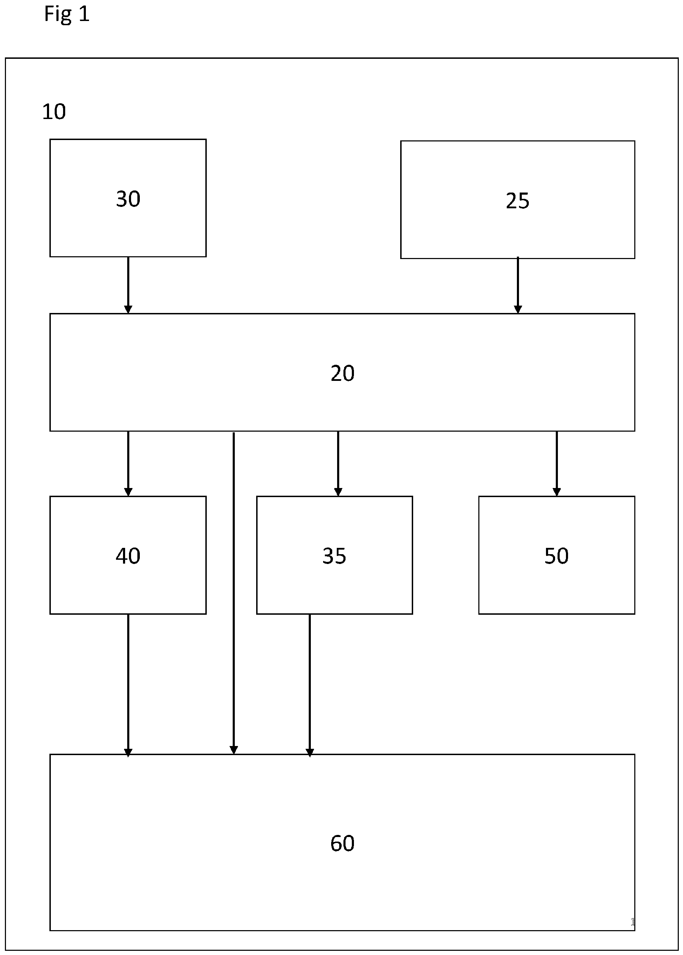

Fig. 1 shows an overview of a typical hybrid classical-quantum system which can be used for performing the method set out in this document. Fig. 1 shows an overview of a computing system 10 for implementing the method of this document. The computing system 10 is, for example, a hybrid quantum and classical system and comprises, in an example, a (classical) central processing unit 20 which is connected to a data storage unit 25 (i.e., one or more memory devices), and a plurality of input/output devices 30. The input/output devices 30 enable input of one or more images and an output of a result for the one or more of the images.

A graphics processing unit 35 for processing vector calculations and a field programmable gate array (FGPA) 40 for control logic that can also be connected to the central processing unit 20. A quantum processor 50 (also termed quantum accelerator) is connected to the classical central processing unit 20. In an alternative embodiment, the quantum processor 50 is emulated on a classical processor.

In one implementation of the computing system 10, the quantum processor 50 is a gate-based quantum processor. It is also possible to use a quantum processor 50 which is a quantum annealing system. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices 30 and data storage units 25 are connected by the computer network 60.

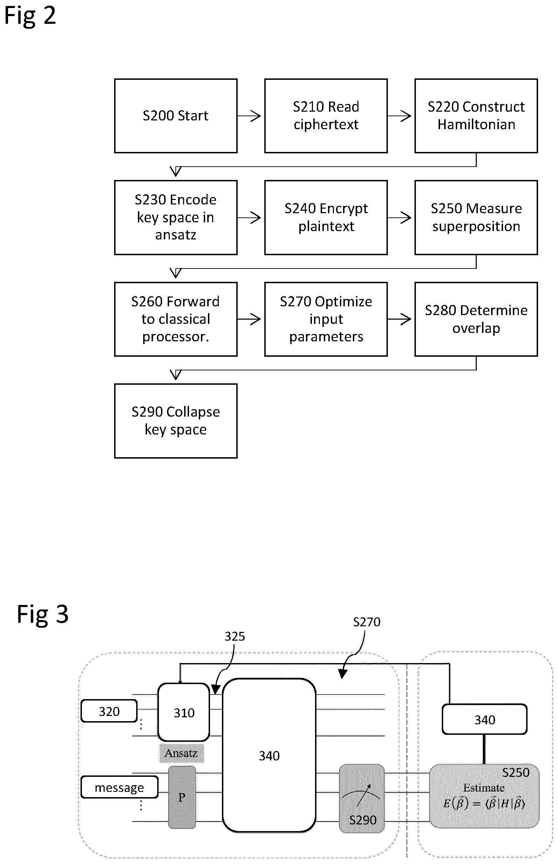

The method is illustrated in Figs. 2 and 3 and will now be described. In a first non-limiting aspect, an implementation of the VQAA applied to simplified-data encryption standard (S-DES) will be presented. S-DES is a symmetric key algorithm for the encryption of digital data and is based on the Digital Encryption Standard originally developed in the 1970s by IBM. In the method, the ciphertext is encoded as the ground state of a Hamiltonian that is constructed through a 3-regular graph (also called trivalent graph), and the ground state can be found using a variational approach.

In a first step S210, the ciphertext and the corresponding known plaintext are input into the system 100 through an input/output device 30 and, in step S220, the Hamiltonian is constructed whose ground state corresponds to the ciphertext. The construction of the Hamiltonian is outlined below.

A key space 320 is encoded in step S230 into an adjustable quantum state by a quantum circuit which is in this case a parameterized quantum circuit (PQC) 310 (which is also known as an ansatz). A PQC output 325 of the parameterized quantum circuit 320 will be used as a key to encrypt in an encryption element 340 the quantum processor 50 in step S240 the known message or plaintext (based on the S-DES protocol, in this non-limiting aspect) and thereby to obtain a superposition of ciphertexts in the quantum processor 50. In an alternative embodiment, a tensor network can be used instead of a parameterized quantum circuit. Examples of tensor networks that can be used include a Matrix Product State, Projected Entangled Pair State, Tree Tensor Networks, or others. The parameters of the tensor network are optimized variationally. The tensor network can be implemented on the central processing unit 20 or the graphics processor 35.

Finally, the superposition of ciphertexts is measured in step S250 and the results are forwarded in step S260 to a classical optimization algorithm 340 in the classical central processing unit 20. The optimization algorithm is used to adjust in step S270 the input parameters of the parameterized quantum circuit 310 to arrange for the superposition ciphertext state to have a "considerable" overlap at a predetermined overlap value with the known ciphertext in step S280. When the result of measurement is substantially the known ciphertext, the key space also collapses in step S290 to the required key state.

An example of the implementation of the VQAA with 18 qubits will serve to illustrate this method. The example is based on a pair of known plaintexts (with 8 bits) and the corresponding ciphertext (also of 8 bits). The aim of this implementation is to find the secret key (having 10 bits). The ciphertext is encoded in the Hamiltonian ground state (step S220). The result of step S240 is that, after the symmetric cryptography operations, there is a linear combination of all the ciphertexts corresponding to the known plaintext, associated with all possible keys.

The variational process (i.e., step S270) is started to find the Hamiltonian associated with the lowest energy, which contains the corresponding key. This is done by using each bit of the eight bits in the ciphertext as a node to construct regular graphs. It is possible, for an 8-node network, to construct an n-regular (where n=1, 2...,7) graph. In practice, it is chosen that n=3 (although this is not limiting of the invention and other options may be also possible).

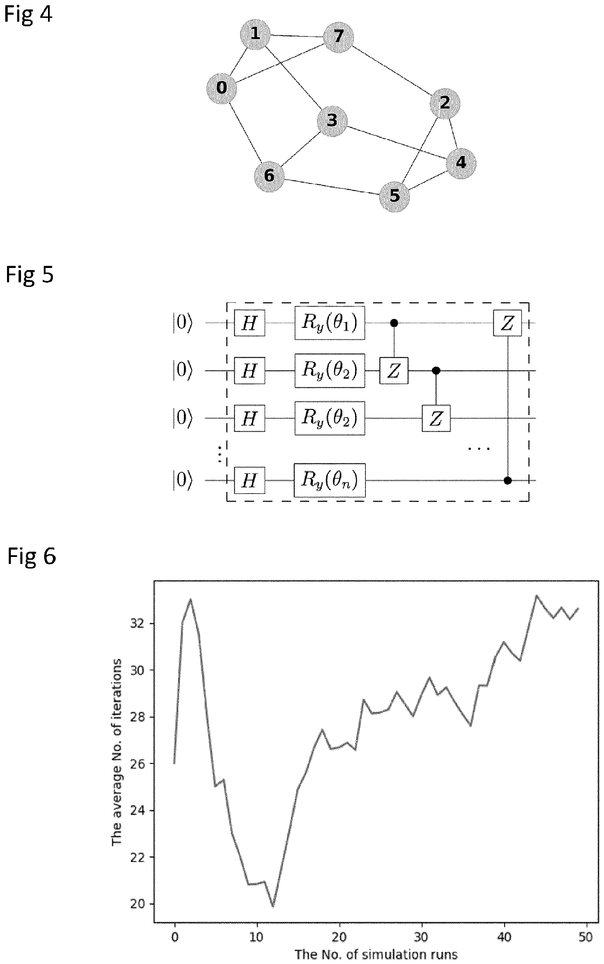

The known ciphertext is encoded in the step S220 into the Hamiltonian ground state and this will now be described. Each of the eight bits of the cyphertext is used as a node to construct an 8-node 3-regular graph. The value of the i-th node is denoted by V(i), which is the value of the i-th bit. If there is a pair of nodes (i, j) in the graph that are connected, the term $w_{ij}Z_iZ_j$ is added into the Hamiltonian, where Z is the Pauli-Z operator, $i, j \in \{0, 1, ..., 7\}$. The coefficient $w_{ij}$ is determined by V (i) and V (j): $w_{ij}$ = +1 if V(i) = V(j), and -1 otherwise. Additionally, the single-qubit terms $t_iZ_i$ are added, such that $t_i$ = 0.5 if V(i) = 1, and -0.5 if V(i) = 0. The resulting 3-regular graph shown in Fig. 4. The corresponding

Hamiltonian is:

$$H = w_{01}Z_0Z_1 + w_{06}Z_0Z_6 + w_{07}Z_0Z_7 + w_{13}Z_1Z_3 + w_{17}Z_1Z_7$$

$$+ w_{24}Z_2Z_4 + w_{25}Z_2Z_5 + w_{27}Z_2Z_7 + w_{34}Z_3Z_4 + w_{36}Z_3Z_6$$

$$+ w_{45}Z_4Z_5 + w_{56}Z_5Z_6 + \sum_{i=0}^{7} t_i Z_i.$$

The cost function $E(\beta)$ is the expectation value of the Hamiltonian where $|\beta>$ is the superposition of the ciphertext state. The parameterized quantum circuit 310 is the ansatz shown in Fig. 5. It will be appreciated, however, that other variational quantum circuits could be implemented as well without further restrictions. The exemplary implementation shown in Fig. 5 and described in this document requires ten parameters ($\beta / \theta$) and its circuit depth is 12. The initial state is prepared as the uniform superposition state. The PQC / ansatz 310 gives a linear combination of all possible keys, and the S-DES block gives the linear combination of all ciphertext corresponding to the known plaintext.

The variational process starts to find the Hamiltonian with the lowest energy. This Hamiltonian with the lowest energy state is expected to contain the corresponding key. The superposition of the ciphertexts is measured in step S250 and the result is forwarded to a classical optimization algorithm 330 running on a classical central processing unit 20 to adjust the input parameters of the PQC 310. This variational process (adjusting the input parameters of the PQC 310) continues until a considerable overlap with the known ciphertext takes place. The considerable overlap is a moment in which the key space is considered to collapse to the desired key state.

In the exemplary implementation, the classical optimization algorithm with best results is the Gradient Descent method with cut-off condition of -9, i.e., when the expectation of the Hamiltonian is less than -9, the first excited energy. GD is restarted when the norm of the gradient is lower than 0.8, the moment in which the parameters are randomly initialized. The learning rate is set to 1.08.

It is also possible to use other cost functions, such as evaluating the Hamming distance between the known cyphertext created from the correct key and the cyphertext obtained from the method.

Simulation.

The method has been simulated as follows. In each simulation the key and the plaintext are chosen randomly. The plot shown in Fig. 6 describes the evolution of the average number of iterations to get the overlap between the ciphertexts while the number of simulations runs increases. The Gradient Descent method with the mentioned ansatz presents an average of 32 iterations as can be seen in Fig. 6.

It will be noted that the range of the key is $2^{10} - 1$ while the range of the ciphertext is $2^8-1$. This means that multiple ones of the keys will produce the same ciphertext, as there is not a one-to-one relation between the ciphertext and the plaintext. When the variational process is convergent, it was found by sampling that the obtained ciphertext coincides with the target ciphertext in approx. 65% of the cases on average. From the approx. 65% successful cases, depending on the number of valid keys for the pair plaintext-ciphertext, the percentage of finding the exact key or an equivalent key will vary.

The VQAA can be improved in terms of better classical optimization algorithm, such as Adaptive Moment Estimation Algorithm (ADAM), better ansatz (less sequential ansatz to increase entanglement, in search) and better initial parameters (learning rate, cut-off condition, initial state).

The method set out above is unfeasible on current NISQ devices, due to limited qubit capacity of NISQ devices. For instance, to launch a quantum attack on the AES256 encryption standards, it would be necessary to have 256 qubits for the key, in addition to the qubits required for the plaintext message. However, current quantum devices go up to 128 qubits (IBMQ System One), and therefore cannot launch this attack. However, there are ways to simplify by large the number of qubits involved.

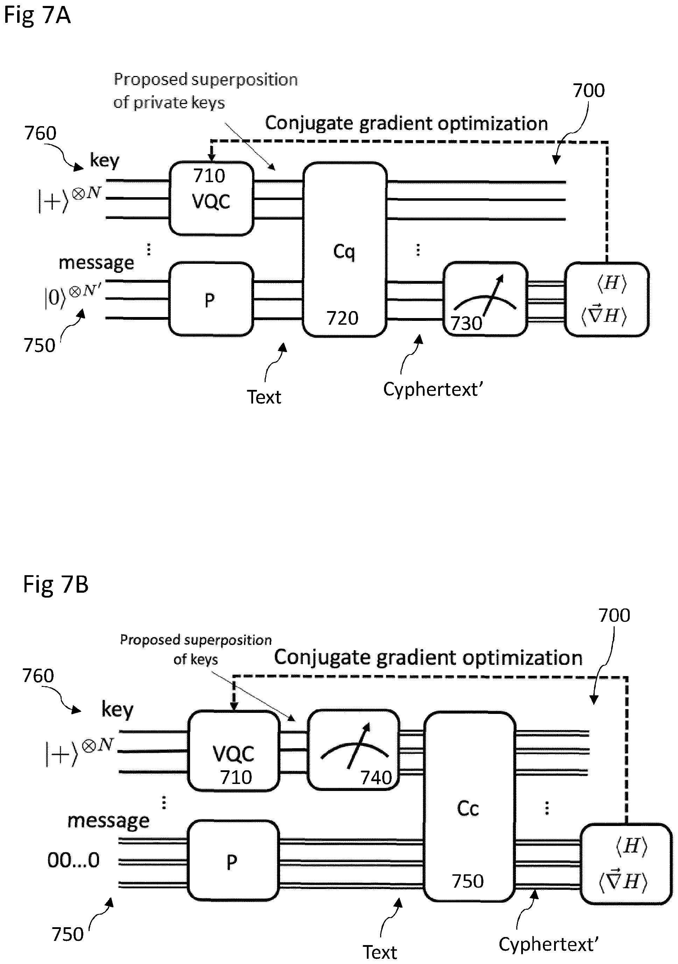

The first simplification is to notice that, in the quantum circuit of Fig. 5, the measurement can be moved around, as illustrated in Figs. 7A and 7B.

Fig. 7A shows the original implementation 700 as seen in Fig. 5. In the implementation of Fig. 7A, the measurements are performed on the message space, and these measurements are used to sample the energies of the Hamiltonian. The PQC is shown as the quantum circuit 710 and the encryption protocol as an encryption element 720 in Fig. 7A. The output of the encryption protocol 720 is measured at 730.

Since everything is implemented on the quantum processor 50, the encryption protocol in element 720 "Cq" must be unitary (hence the "q" for "quantum") and is reversible. This implementation can only be applied to symmetric-key encryption protocols. The cost function is sampled with a given probability Pk. This can then lead to a re-arrangement 700' of the implementation 700 as shown in Fig. 7B in which the measurements are done at a measurement element 740 in the key space, right after the quantum circuit 710. The outcome of these measurements at 740 are a set of keys, according to a probability distribution Pk. These keys, sampled with these probabilities, are then used by a *classical* encryption mechanism in the encryption element 750 "Cc" to encrypt the original message. The outcome is a set of encrypted messages that are then used to sample the energy cost function with probability Pk. This probability distribution Pk is the same as in the original method of Fig. 7A, but in the implementation of Fig. 7B is obtained from the key space and not the message space. Thus, the cost function is sampled according to the same distribution in both cases, and, in both cases, this implies the same variational update of the variational quantum circuit.

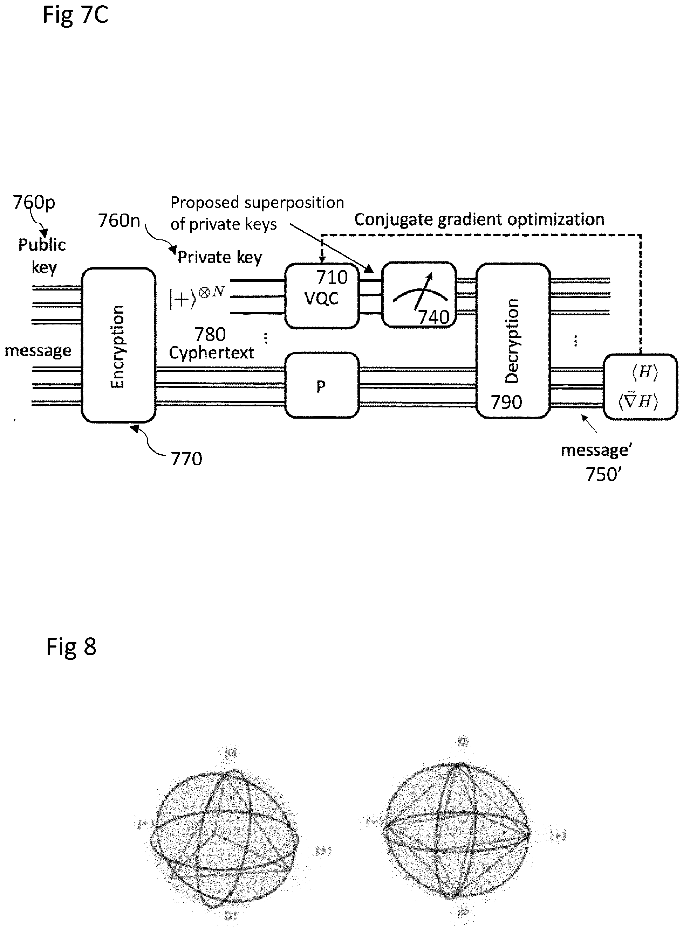

In this aspect shown in Fig. 7B, there are a number of advantages: (1) the number of qubits has been substantially reduced, since it is only necessary to have a greatly reduced number of qubits for the key space in this aspect; (2) the whole encryption protocol Cc - designated by the encryption element 750 - is classical and does not need to be implemented on any quantum processor 50. This means that any encryption function coded in e.g., python would do the job. (3) Since the encryption function is not implemented on the quantum processor 50, the encryption does not need to be reversible, and hence the implementation shown in Fig. 7B is valid not only for symmetric-key cryptography, but also for non-symmetric key cryptography, as shown in Fig. 7C.

In Fig. 7C, the message is encrypted by the encryption element 770 using a public key 760p to create the ciphertext 780 which is passed to the classical decryption element 790.

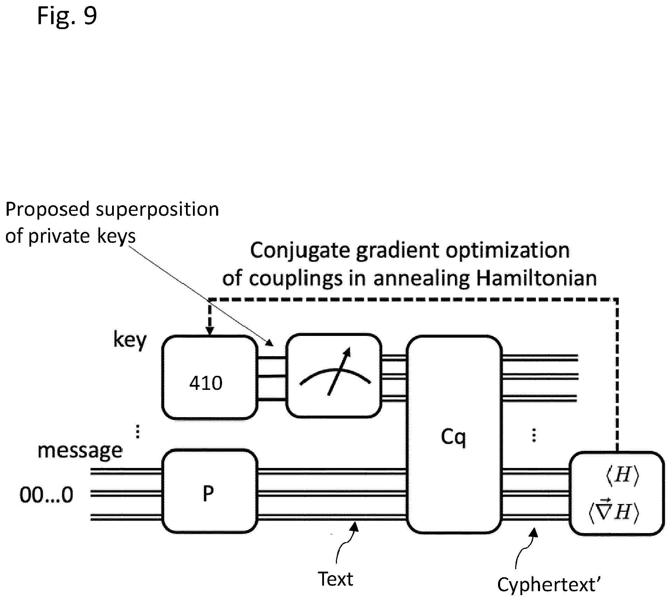

In a further aspect shown in Fig. 9, the method can be implemented using a quantum annealer 910, such as those from D-Wave, as the quantum processor 50. The quantum annealer 910 is used to generate the variational states for the qubits (note: no non-orthogonal basis in this case). The variational parameters are the couplings of the D-Wave Hamiltonian and other annealing parameters (such as, but not limited to annealing schedule, extra magnetic fields). In other words, there is a new key Hamiltonian $H_k$, with variational qubit-qubit couplings such that the key is the ground state of the key Hamiltonian $H_k$. These variational couplings are fine-tuned via gradient descent (as in the previous approach with VQE), so that the states produced by the quantum annealer tend to be the keys giving low energies for $H_{text}$ (which is the Hamiltonian employed in the previously described approaches).

The advantages of the aspect shown in Fig. 9 are multiple. Firstly, it is possible to adapt the key Hamiltonian $H_k$ to the topology of the quantum annealer 910 and there is no need for fully connected qubits, and it can be done as two-body. Secondly, the quantum annealer 910, such as the D-Wave Advantage with 5000 qubits can do 5000/128 ~ 40 key samplings in parallel for a key with 128 qubits. This sampling improves gradient descent and allows explore of the variational space 40 times faster - if the classical part is also parallelized. Thirdly, the quantum annealer 910 (e.g., D-Wave Advantage) is good with small-size Hamiltonians that fit the topology of its processor, so that the states obtained from this approach should be much better than by VQE.

A further aspect is the use of non-orthogonal qubit states: Current NISQ quantum devices have a limited number of qubits (as noted above) and are therefore only able to handle a small number of qubit variables. For current variational quantum algorithms in gate-based quantum computers, one qubit of the quantum computer is typically assigned to one bit variable of the cost function. The largest gate-based quantum computer as of today, built by IBM, has 127 superconducting qubits. Therefore, with the current approach, it is possible to optimize the cost functions up to 127 bits which is far from real-life useful cybersecurity applications.

Current variational quantum optimization algorithms are based on e.g., Variational Quantum Eigensolvers (VQE). This approach fits very well into NISQ devices but is very hard to scale up to those cost functions involving many bits. This is because, in the current approach, each bit variable in the cost function corresponds to one qubit in the NISQ device. The NISQ devices have a limited number of qubits, and this limited number limits the applicability to large, realistic cost functions. This is limiting in cybersecurity applications.

One idea to overcome the problem of limited number of qubits is to modify the assignment between the quantum state of each individual qubit and the corresponding variable in the cost function. The method set out above has the correspondence as follows: $|0\rangle \rightarrow 0$, $|1\rangle \rightarrow 1$. In other words, a measurement in the 0/1 basis provides immediately the value of the bit variable. It is possible to extend the representability of classical discrete variables using different non-orthogonal states of one qubit. In particular, p maximally orthogonal states of one qubit could represent the values of a classical variable q = 0, 1, ..., p-1. The maximally orthogonal states of one qubit correspond to Platonic solids inside of the Bloch sphere of the qubit, as illustrated in Fig. 8.

Using this Bloch sphere representation, it is possible to fit much larger optimization problems in variational quantum algorithms in the NISQ devices for cybersecurity attacks. As an example, for a processor of 127 qubits (such as the largest NISQ gate-base device as of today), with 40 states per qubit, it would be possible to optimize cost functions of up to 5080-bit variables.

The combination of the further aspects allows to launch a variational quantum attack on current state of the art cryptographic protocols, using current quantum hardware. As an example, for AES128, the 128-bit keys used for civil applications could be decrypted using a 64-qubit quantum computer with 4 non-orthogonal states per qubit. This could be run on e.g., Rigetti's latest quantum computer of 80 qubits. The military-grade keys of AES256, involving 256 bits, could be subject of a variational quantum attack on a 128-qubit quantum computer also using 4 non-orthogonal states per qubit. This could be done on IBMQ System One, the latest quantum computer from IBM with 128 qubits. This is expected to be more dramatic in the future since IBM is planning to have around 400 qubits by the end of 2022 and plans to reach 4000+ qubits by 2025.

To implement an improved variational optimization algorithm such as in VQAA using the qubit states as in Fig. 8, it is necessary to slightly modify the measurement at the end of the quantum circuit. In this implementation of the algorithm, instead of implementing a measurement in the computational 0/1 basis, a quantum state tomography is implemented individually for the qubits. Quantum state tomography is a technique that determines, via measurements, the exact individual quantum state of a qubit in the Bloch sphere. In this way, the readout of the measurements would not be 0/1, but rather the quantum state of each qubit in their respective Bloch spheres, which would correspond, for each qubit, to some state as the ones in Fig. 8. In this way, a quantum attack is realized on real-life cybersecurity protocols using current NISQ quantum hardware.

Other non-orthogonal encodings can also be used, including polyhedral, discretized qubit angles and continuum optimization.

It will be further appreciated that the use of the quantum variational circuits 310, 710 and 1125 could be replaced by tensor networks. In this case, the key space 320 is encoded into the tensor network and the values of the tensors in the tensor networks are updated using gradient descent.

The search can also be parallelized by used more than one variational circuit 310, 710, 1125 to search for minima.

One further method of accelerating the search for the key is to identify the local minima (rather than trying to find the global minima) and subsequently test which one(s) of the local minima result in the key. Alternatively, it is also possible to use this method to generate a set of keys that, even if not correct, can be used to train a machine learning algorithm (such as a deep neural network or others, including quantum machine learning) in order to predict the correct key. The training set obtained in this way is already in the neighbourhood of the correct key in the mathematical "key space", therefore enhancing the accuracy of the subsequent machine learning.

Reference Numerals

| | |
|---|---|
| 10 | Computing system |
| 20 | Classical central processing unit |
| 25 | Data storage unit |
| 30 | Input/output devices |
| 35 | Graphical processing unit |
| 40 | Field programmable gate array |
| 50 | Quantum Processor |
| 60 - | Computer network |

| | |
|---|---|
| 310 | quantum circuit (PQC) |
| 320 | Key space |
| 325 | PQC output |
| 330 | Encryption element |
| 340 | Classical optimization element |

| | |
|---|---|
| 700 | Implementation |
| 710 | Quantum circuit |
| 720 | Encryption element |
| 730 | Measurement element |
| 740 | Measurement element |
| 750 | Encryption element |
| 760p | Public key |
| 770 | Encryption element |
| 780 | Cyphertext |
| 790 | Decryption element |

| | |
|---|---|
| 910 | Quantum annealer |

**Claims**

1. A method for determining an encryption key in a key space (320) for encrypting a plaintext to a corresponding encrypted ciphertext, the method comprising:

   - constructing (S220) a Hamiltonian based on the encrypted ciphertext;
   - encoding (S230) the key space (320) into a quantum circuit (310);
   - encrypting (S240) the plaintext using the quantum circuit (310) to obtain a superposition of ciphertexts;
   - measuring the superposition of ciphertexts and determining (S280) an overlap between the measured superposition of ciphertexts and the encrypted ciphertext; and
   - on reaching a pre-determined overlap value, collapsing (S290) the key space (320) to determine the encryption key, otherwise adjusting (S270) parameters of the quantum circuit (310).

2. The method of claim 1, wherein the step of adjusting the parameters of the circuit (310) comprises using a classical optimization algorithm.

3. The method of claim 2, wherein the classical optimization algorithm is a gradient descent method.

4. The method of claim 1, wherein the encoding (S230) of the key space into the circuit (310) is one of encoding into a parameterized quantum circuit or a tensor network.

5. The method of any of the above claims, wherein the constructing (S220) of the Hamiltonian comprises creating a graph with a plurality of nodes representing the bits of the encrypted ciphertext.

6. The method of claim 5, wherein the graph is a 3-regular graph.

7. The method of any of the above claims, wherein the encrypting (S240) is carried out using one of a classical processor (20) or a quantum processor (50).

8. The method of any of the above claims, wherein the collapse of the key space (320) is carried out before the encrypting (S240) in the classical processor (20).

9. The method of any of the above claims, wherein the encrypting (S240) is performed using a public key (760p) and the collapsing (S290) determines a private key.

10. The method of any of the above claims, wherein the encrypting (S240) comprises decrypting a previously encrypted cyphertext (780).

11. A system for determining an encryption key in a key space (320) for encrypting a plaintext to a corresponding encrypted ciphertext, the system comprising:

    - at least one input/out device (30) for inputting a plaintext;
    - at least one encryption element (330) for encrypting the plaintext;
    - at least one quantum circuit (310, 710, 1125) encoding the key space (320); and
    - at least one optimisation element (340) for adjusting (S270) the parameters of the quantum circuit (310).

12. The system of claim 11, wherein the quantum circuit (310) is implemented as one of a quantum annealer or a quantum gate computer.

13. The system of claim 11 or 12, wherein the encryption element (330) is implemented in a quantum computer (50) or a classical computer (20).

14. The system of one of claims 11 to 13, further comprising a further encryption element (770) for encrypting an incoming message using a public key (760p).

15. The system of one of claims 11 to 14, wherein the at least one encryption element (330) is replaced by a decryption element (770).

**EP 4 366 229 A1**

**Amended claims in accordance with Rule 137(2) EPC.**

1. A method for determining an encryption key in a key space (320) for encrypting a plaintext to a corresponding encrypted ciphertext, the method comprising:

   - constructing (S220) a Hamiltonian based on the encrypted ciphertext;
   - encoding (S230) the key space (320) into a quantum circuit (310);
   - encrypting (S240) the plaintext using the quantum circuit (310) to obtain a superposition of ciphertexts;
   - measuring the superposition of ciphertexts and determining (S280) an overlap between the measured superposition of ciphertexts and the encrypted ciphertext; and
   - on reaching a pre-determined overlap value, collapsing (S290) the key space (320) to determine the encryption key, otherwise adjusting (S270) parameters of the quantum circuit (310)

   wherein the measuring the superposition of ciphertexts is performed at a measurement element (740) in the key space (320).

2. The method of claim 1, wherein the step of adjusting the parameters of the circuit (310) comprises using a classical optimization algorithm.

3. The method of claim 2, wherein the classical optimization algorithm is a gradient descent method.

4. The method of claim 1, wherein the encoding (S230) of the key space into the circuit (310) is one of encoding into a parameterized quantum circuit or a tensor network.

5. The method of any of the above claims, wherein the constructing (S220) of the Hamiltonian comprises creating a graph with a plurality of nodes representing the bits of the encrypted ciphertext.

6. The method of claim 5, wherein the graph is a 3-regular graph.

7. The method of any of the above claims, wherein the encrypting (S240) is carried out using one of a classical processor (20) or a quantum processor (50).

8. The method of any of the above claims, wherein the collapse of the key space (320) is carried out before the encrypting (S240) in the classical processor (20).

9. The method of any of the above claims, wherein the encrypting (S240) is performed using a public key (760p) and the collapsing (S290) determines a private key.

10. The method of any of the above claims, wherein the encrypting (S240) comprises decrypting a previously encrypted cyphertext (780).

11. A system for determining an encryption key in a key space (320) for encrypting a plaintext to a corresponding encrypted ciphertext, the system comprising:

    - at least one input/out device (30) for inputting a plaintext;
    - at least one encryption element (330, 720, 750, 770) for encrypting the plaintext;
    - at least one quantum circuit (310, 710, 1125) for encoding the key space (320);
    - at least one optimisation element (340) for adjusting (S270) the parameters of the quantum circuit (310); and
    - a measurement element (740) for measuring the superposition of ciphertexts in the key space (320).

12. The system of claim 11, wherein the quantum circuit (310) is implemented as one of a quantum annealer or a quantum gate computer.

13. The system of claim 11 or 12, wherein the encryption element (330, 720, 750, 770) is implemented in a quantum computer (50) or a classical computer (20).

14. The system of one of claims 11 to 13, further comprising a further encryption element (770) for encrypting an incoming message using a public key (760p).

9

15. The system of one of claims 11 to 14, wherein the at least one encryption element (330) is replaced by a decryption element (770).

Fig 1

# Fig 2

```
┌─────────────┐     ┌─────────────┐     ┌─────────────┐
│  S200 Start │ ──> │  S210 Read  │ ──> │ S220 Construct│
│             │     │  ciphertext │     │  Hamiltonian │
└─────────────┘     └─────────────┘     └─────────────┘
       │                                        │
       ∨                                        │
┌─────────────┐     ┌─────────────┐     ┌─────────────┐
│  S230 Encode│ ──> │ S240 Encrypt│ ──> │ S250 Measure│
│ key space in│     │  plaintext  │     │ superposition│
│   ansatz    │     │             │     │             │
└─────────────┘     └─────────────┘     └─────────────┘
       │                                        │
       ∨                                        │
┌─────────────┐     ┌─────────────┐     ┌─────────────┐
│ S260 Forward│ ──> │S270 Optimize│ ──> │S280 Determine│
│ to classical│     │    input    │     │   overlap   │
│  processor. │     │  parameters │     │             │
└─────────────┘     └─────────────┘     └─────────────┘
       │                                        │
       ∨                                        │
┌─────────────┐
│S290 Collapse│
│  key space  │
└─────────────┘
```

# Fig 3

Fig 4

Fig 5

Fig 6

## Fig 7A

## Fig 7B

## Fig 7C

## Fig 8

# Fig. 9

Proposed superposition of private keys

Conjugate gradient optimization of couplings in annealing Hamiltonian

key

410

message

00...0

P

Cq

$\langle H \rangle$

$\langle \vec{\nabla} H \rangle$

Text

Cyphertext'

Fig. 10

$$H = H_t + H_c + H_{tc}$$

Europäisches
Patentamt

European
Patent Office

Office européen
des brevets

# EUROPEAN SEARCH REPORT

Application Number

EP 22 38 3064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG ZEGUO ET AL: "Variational quantum attacks threaten advanced encryption standard based symmetric cryptography", SCIENCE CHINA INFORMATION SCIENCES, SCIENCE CHINA PRESS, BEIJING, vol. 65, no. 10, 18 July 2022 (2022-07-18), XP037907604, ISSN: 1674-733X, DOI: 10.1007/S11432-022-3511-5 [retrieved on 2022-07-18] | 1-3,5-15 | INV.<br>H04L9/00<br>H04L9/08 |
| Y | * paragraph [0001] – paragraph [0004] * | 4 | |
| X,D | ZEGUO WANG ET AL: "A Variational Quantum Attack for AES-like Symmetric Cryptography", ARXIV.ORG, CORNELL UNIVERSITY LIBRARY, 201 OLIN LIBRARY CORNELL UNIVERSITY ITHACA, NY 14853, 7 May 2022 (2022-05-07), XP091222329, | 1-3,5-15 | |
| Y | * paragraph [0001] – paragraph [0004] * | 4 | |
| Y | JACK Y ARAZ ET AL: "Classical versus Quantum: comparing Tensor Network-based Quantum Circuits on LHC data", ARXIV.ORG, CORNELL UNIVERSITY LIBRARY, 201 OLIN LIBRARY CORNELL UNIVERSITY ITHACA, NY 14853, 21 February 2022 (2022-02-21), XP091162810, * paragraph [0002] * | 4 | TECHNICAL FIELDS SEARCHED (IPC)<br><br>H04L |
| A | US 2022/292385 A1 (SAUVAGE FREDERIC [GB]) 15 September 2022 (2022-09-15) * figure 2B * * paragraph [0085] * | 1-15 | |

–/––

The present search report has been drawn up for all claims

| Place of search | Date of completion of the search | Examiner |
|---|---|---|
| Munich | 27 March 2023 | Bec, Thierry |

EPO FORM 1503 03.82 (P04C01)

Europäisches
Patentamt

European
Patent Office

Office européen
des brevets

# EUROPEAN SEARCH REPORT

Application Number

EP 22 38 3064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | DENISENKO D V ET AL: "Application of Grover's Quantum Algorithm for SDES Key Searching", JOURNAL OF EXPERIMENTAL AND THEORETICAL PHYSICS, PLEIADES PUBLISHING, MOSCOW, vol. 128, no. 1, 8 April 2019 (2019-04-08), pages 25-44, XP036753782, ISSN: 1063-7761, DOI: 10.1134/S1063776118120142 [retrieved on 2019-04-08] * paragraph [0002] - paragraph [0004] * ----- | | |
| T | DENISENKO DENIS: "Quantum differential cryptanalysis", JOURNAL OF COMPUTER VIROLOGY AND HACKING TECHNIQUES, SPRINGER PARIS, PARIS, vol. 18, no. 1, 3 September 2021 (2021-09-03), pages 3-10, XP037700191, DOI: 10.1007/S11416-021-00395-X [retrieved on 2021-09-03] * paragraph [0002] - paragraph [0003] * ----- | | TECHNICAL FIELDS SEARCHED (IPC) |

The present search report has been drawn up for all claims

| Place of search | Date of completion of the search | Examiner |
|---|---|---|
| Munich | 27 March 2023 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

**EP 22 38 3064**

This annex lists the patent family members relating to the patent documents cited in the above-mentioned European search report.
The members are as contained in the European Patent Office EDP file on
The European Patent Office is in no way liable for these particulars which are merely given for the purpose of information.

**27-03-2023**

| Patent document cited in search report | Publication date | Patent family member(s) | Publication date |
|---|---|---|---|
| US 2022292385 A1 | 15-09-2022 | US 2022292385 A1<br>WO 2022192525 A1 | 15-09-2022<br>15-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** *A Variational Quantum Attack for AES-like Symmetric Cryptography, https://arxiv.org/abs/2205.03529*